# DEMANDE DE BREVET EUROPEEN

(11) **EP 3 480 088 A1**
(43) Date de publication de la demande: **08.05.2019**
(21) Numéro de dépôt: 18204134.3
(22) Date de dépôt: 02.11.2018
(51) Int. Cl.: B62H 5/08, B60R 25/045, B62M 6/45

(54) **DISPOSITIF ANTIVOL POUR VEHICULE A PROPULSION HUMAINE COMPRENANT AU MOINS UN MOYEU**

(30) Priorité: 03.11.2017 FR 1760340
(71) Demandeur: Birota, 92170 Vanves (FR)
(72) Inventeur: LE RODALLEC, Arnaud, 75015 Paris (FR); CARREEL, Eric, 92190 MEUDON (FR)
(74) Mandataire: Ipside

(57) **Abrégé**

L'invention concerne un dispositif antivol (110 ; 510) pour un véhicule (100 ; 500) à propulsion humaine comprenant au moins un moyeu (105 ; 530).

Le dispositif antivol (110 ; 510) comprend un dispositif électrique (130 ; 520) associé audit moyeu, le dispositif antivol fonctionnant entre deux états :
- un état, dit activé, au cours duquel le dispositif électrique applique un couple résistif sur ledit moyeu, le couple résistif s'opposant à la rotation dudit moyeu ; et
- un état, dit désactivé, au cours duquel le dispositif électrique applique un couple résistif réduit ou nul sur ledit moyeu.

Le dispositif antivol (110 ; 510) comprend également un circuit électrique (150 ; 310 ; 410) connecté au dispositif électrique et configuré pour créer le couple résistif appliqué par le dispositif électrique.

## Description

### DOMAINE TECHNIQUE DE L'INVENTION

Le domaine de l'invention est celui des véhicules à propulsion humaine.

Plus précisément, l'invention concerne un dispositif antivol pour véhicule à propulsion humaine comprenant au moins un moyeu.

L'invention trouve notamment des applications pour un système de bicyclette partagée, sans borne d'accroche, comprenant une flotte de bicyclette à assistance électrique au pédalage.

### ÉTAT DE LA TECHNIQUE

Il est connu de l'art antérieur des techniques de dispositifs empêchant le vol d'un véhicule à propulsion humaine tel qu'une bicyclette.

De telles techniques sont basées sur un verrouillage mécanique d'une partie de la bicyclette en s'accrochant à un élément extérieur tel qu'un mobilier publique.

L'inconvénient majeur des ces techniques est de nécessiter un aménagement urbain important et régulier pour permettre l'accrochage de la bicyclette à proximité de la destination d'un utilisateur.

Cet aménagement est lourd à mettre en place dans le cadre d'une flotte partagée car le maillage du territoire doit être important afin qu'un utilisateur soit toujours à proximité d'une borne lui offrant soit une bicyclette soit une place où accrochée la bicyclette utilisée.

Il existe également des techniques de verrouillage mécanique entravant la rotation d'une des roues de la bicyclette en s'insérant par exemple entre deux rayons de la roue.

Un inconvénient important de ces techniques est la fiabilité mécanique des pièces mécaniques mobiles de ces techniques. Par ailleurs, le verrouillage de l'antivol nécessite une bonne orientation de la roue afin que l'antivol généralement fixé au cadre puisse être fermée.

Le risque de détérioration de ces techniques s'accentue généralement avec le nombre d'utilisation mécanique de l'antivol, ce qui engendre des réparations régulières de la bicyclette et par conséquent des coûts d'entretien importants.

### OBJECTIFS DE L'INVENTION

La présente invention vise à remédier à tout ou partie des inconvénients de l'état de la technique cités ci-dessus.

Un des principaux objectifs de l'invention est de proposer une technique antivol qui verrouille l'utilisation potentielle d'un véhicule d'une flotte partagée, tel qu'une bicyclette ou une trottinette.

Un autre objectif principal de l'invention est de proposer une technique antivol qui dissuade un individu d'utiliser un tel véhicule sans en y être autorisé.

Un des autres objectifs principaux de l'invention est de proposer une technique antivol qui puisse être activée et/ou désactivée à distance.

Un autre objectif important de l'invention est de proposer une technique antivol qui comprend le minimum de pièces mobiles.

Un autre objectif de l'invention est de proposer une technique antivol résistante à de nombreuses utilisations et dont l'entretien est réduit.

### EXPOSÉ DE L'INVENTION

Ces objectifs, ainsi que d'autres qui apparaîtront par la suite sont atteints à l'aide d'un dispositif antivol pour un véhicule à propulsion humaine comprenant au moins un moyeu.

Un véhicule à propulsion humaine comprenant au moins un moyeu peut être par exemple une bicyclette, également appelée vélo, un tricycle, une trottinette, une trottinette électrique, une voiture à pédale, un pédalo, etc. Généralement, la propulsion humaine est assurée par un dispositif de pédalage utilisé par un individu.

Il convient de souligner qu'un tel véhicule peut être une trottinette électrique, dans la mesure où une trottinette électrique peut être propulsée par un individu en poussant le sol avec une de ses jambes.

Selon l'invention, un tel dispositif comprend un dispositif électrique associé audit moyeu, le dispositif antivol fonctionnant entre deux états :
- un état, dit activé, au cours duquel le dispositif électrique applique un couple résistif sur ledit moyeu, le couple résistif s'opposant à la rotation dudit moyeu ; et
- un état, dit désactivé, au cours duquel le dispositif électrique applique un couple résistif réduit ou nul sur ledit moyeu.

Ainsi, un individu cherchant à utiliser le véhicule alors que le dispositif électrique est dans un état activé, sent une résistance importante lorsqu'il cherche à faire avancer le véhicule, par exemple par pédalage, le dissuadant d'utiliser le véhicule sans en être autorisé.

Par contre, lorsque le dispositif électrique est dans un état désactivé, par exemple après une demande d'autorisation préalable, l'individu sentant une résistance beaucoup plus faible, peut utiliser le véhicule sans se fatiguer outre mesure.

Il convient de souligner que le dispositif antivol n'immobilise pas le véhicule mais applique une force supplémentaire destinée à dissuader un individu cherchant à utiliser le véhicule alors que le dispositif antivol est activé.

Préférentiellement, le dispositif électrique comprend un rotor en rotation autour d'un stator.

Un tel dispositif électrique peut avantageusement être un moteur d'un dispositif d'assistance au pédalage installé sur le véhicule.

L'état du dispositif électrique est généralement commandé par une carte électronique.

Avantageusement, le dispositif antivol comprend également un circuit électrique connecté au dispositif électrique et configuré pour créer le couple résistif appliqué par le dispositif électrique.

Dans des modes de réalisation particuliers de l'invention, le circuit électrique comprend une capacité.

Ainsi, la capacité peut stocker instantanément l'énergie électrique générée par le pédalage, ce qui génère par conséquent un couple résistif important dans un temps très rapide, de l'ordre de la milliseconde ou de la seconde.

Il convient de souligner que l'utilisation d'une capacité est très avantageuse par rapport à une batterie car créant un couple résistif plus important et de manière plus instantanée. En outre, le rendement du stockage par une capacité est meilleur que celui d'une batterie, ce qui permet de réutiliser le maximum d'énergie électrique produite par l'action de pédalage, par exemple pour alimenter un dispositif de dissuasion tel qu'un dispositif de signalement sonore ou lumineux ou un dispositif d'émission d'un signal à destination d'un serveur distant, ou pour réinjecter de l'énergie de sorte à augmenter le couple résistif.

Préférentiellement, la valeur de la capacité est comprise entre 100 mF (millifarad) et 1 F (farad).

Dans des modes de réalisation particuliers de l'invention, le dispositif antivol comprend également un circuit de dissipation thermique de l'énergie connecté au dispositif électrique.

En d'autres termes, le circuit électrique est un circuit de dissipation thermique de l'énergie.

Ainsi, l'énergie générée par le dispositif électrique est dissipée en chaleur, généralement par l'intermédiaire d'un échangeur de chaleur à ailettes ou par toute autre technique de dissipation de chaleur connue.

Avantageusement, le circuit de dissipation comprend une résistance adaptée à l'impédance du dispositif électrique afin de permettre de dissiper efficacement l'énergie générée. Si la valeur de la résistance est trop importante, la tension aux bornes du dispositif électrique augmente rapidement, ce qui nuit à l'efficacité de la dissuasion car la quantité d'énergie produite est trop faible. Inversement, si la valeur de la résistance est trop faible, la dissipation énergétique n'est pas suffisante dans le circuit et entraîne une surchauffe d'un bobinage du dispositif électrique. La valeur de résistance est également adaptée en fonction de la force résistive qui est configurée pour dissuader un individu d'utiliser un véhicule muni d'un tel dispositif antivol sans en être autorisé.

Dans des modes de réalisation particuliers de l'invention, le circuit électrique est un court-circuit.

Dans des modes de réalisation particuliers de l'invention, le circuit électrique comprend également un interrupteur électronique configuré pour fermer ledit circuit lorsque l'état est activé et pour laisser ouvert ledit circuit lorsque l'état est désactivé.

Dans des modes de réalisation préférentiels de l'invention, la valeur de la résistance du circuit de dissipation est égale à la valeur de la résistance interne du dispositif électrique, qui est typiquement de quelques centaines de miliOhms (mOhms), multiplié par un coefficient compris entre deux et dix. Préférentiellement, la valeur de la résistance du circuit de dissipation est comprise entre 0,1 Ohm et 10 Ohms, plus préférentiellement entre 0,5 Ohm et 5 Ohms.

Dans des modes de réalisation particuliers de l'invention, le dispositif antivol comprend également un dispositif de stockage d'énergie électrique connecté au dispositif électrique.

Le dispositif de stockage d'énergie peut être par exemple une capacité ou une batterie telle qu'une batterie d'un dispositif d'assistance électrique au pédalage installé sur le véhicule.

Avantageusement, l'énergie stockée dans le dispositif de stockage d'énergie électrique est utilisée pour augmenter la valeur du couple résistif.

Ainsi, le dispositif électrique n'est pas utilisé en tant qu'assistance à la propulsion du véhicule mais induit une force s'opposant à la propulsion. Cette force contrarotative supplémentaire est dissuasive pour un utilisateur du véhicule.

Dans des modes de réalisation particuliers de l'invention, le dispositif antivol comprend également un dispositif de communication sans fil apte à recevoir un signal permettant de modifier l'état du dispositif électrique.

Ainsi, le dispositif antivol peut être commandé à distance. Un véhicule comprenant un tel dispositif antivol peut s'insérer dans une flotte partagée dont la gestion est effectuée par une plateforme informatique distante.

Préférentiellement, l'état par défaut du dispositif électrique est l'état activé.

Ainsi, le dispositif antivol doit être désactivé avant utilisation d'un véhicule doté d'un tel dispositif. A cet effet, le dispositif électrique peut par exemple comprendre une bascule électrique ou tout autre élément électronique permettant d'obtenir un état par défaut même après coupure de l'alimentation.

Dans des modes de réalisation particuliers de l'invention, le dispositif antivol comprend également un microcontrôleur configuré pour que l'application du couple résistif soit intermittente.

Un tel microcontrôleur comprend par exemple une horloge ou une minuterie, pouvant également être appelée « *timer ».*

Ainsi, la force du couple résistif peut être modifiée au cours du temps, afin de dissuader régulièrement un utilisateur non autorisé d'un véhicule muni d'un tel dispositif antivol.

L'application du couple résistif peut s'effectuer de manière progressive ou de manière instantanée.

L'application du couple résistif peut être effectuée par exemple pendant une période de quelques secondes après un temps d'utilisation prédéterminé de l'ordre de la minute.

Dans des modes de réalisation particuliers de l'invention, le dispositif antivol comprend également un dispositif de signalement de l'état activé du dispositif électrique, par l'émission d'un signal sonore et/ou lumineux.

Ce signalement peut s'effectuer soit lorsque le véhicule n'est pas utilisé, soit lorsque le véhicule est utilisé par un individu non autorisé.

L'invention vise également un véhicule à propulsion humaine comprenant un moyeu et un dispositif antivol, selon l'un quelconque des modes de réalisation précédents, associé audit moyeu.

Dans des modes de réalisation particuliers de l'invention, ledit véhicule est une bicyclette à assistance électrique au pédalage.

Enfin, l'invention vise un procédé de désactivation à distance du dispositif antivol d'un véhicule selon l'une quelconque des modes de réalisation précédents.

Le procédé comprend des étapes de :
- identification dudit véhicule par un individu disposant d'un compte sur une plateforme informatique ;
- communication de ladite identification à la plateforme informatique ;
- traitement de l'identification dudit véhicule par la plateforme informatique en relation avec le compte de l'individu ;
- association de ladite identification au compte de l'individu ;
- émission d'un signal en direction dudit véhicule, le signal comprenant une instruction de modifier l'état du dispositif électrique en état désactivé.

### BRÈVE DESCRIPTION DES FIGURES

D'autres avantages, buts et caractéristiques particulières de la présente invention ressortiront de la description non limitative qui suit d'au moins un mode de réalisation particulier des dispositifs objets de la présente invention, en regard des dessins annexés, dans lesquels :
- la figure 1 représente une bicyclette comprenant un dispositif antivol selon l'invention ;
- la figure 2 est un schéma électrique du dispositif antivol en référence à la figure 1.

### DESCRIPTION DÉTAILLÉE DE MODES DE RÉALISATION DE L'INVENTION

La présente description est donnée à titre non limitatif, chaque caractéristique d'un mode de réalisation pouvant être combinée à toute autre caractéristique de tout autre mode de réalisation de manière avantageuse.

On note, dès à présent, que les figures ne sont pas à l'échelle.

### Exemple d'un mode de réalisation particulier de l'invention

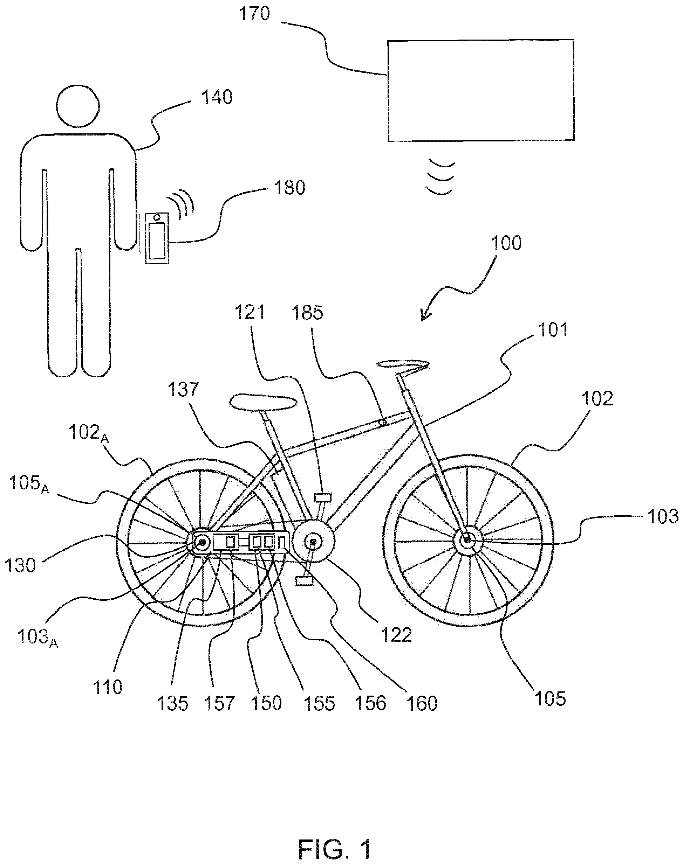

La figure 1 représente une bicyclette 100 comprenant un dispositif antivol 110 selon l'invention. La bicyclette 100 comprend un cadre 101 sur lequel sont maintenues deux roues 102 par l'intermédiaire d'un axe 103 traversant un moyeu 105 de chaque roue 102. La bicyclette 100 comprend également un système de propulsion humaine, comportant un pédalier 121 entrainant la roue arrière 102_{A} de la bicyclette 100 par l'intermédiaire d'une chaîne 122.

Le dispositif antivol 110 installé sur la bicyclette 100 comprend un dispositif électrique 130 dont l'état de fonctionnement est commandé par une carte électronique 135 reliée audit dispositif électrique 130. La carte électronique 135 comprend un processeur exécutant un programme informatique stockée dans une mémoire informatique de la carte électronique 135.

Dans le présent exemple non limitatif de l'invention, le dispositif électrique 130 est un moteur électrique d'un dispositif d'assistance au pédalage installé sur la bicyclette 100 et comprenant une batterie 137 stockant de l'énergie électrique. Le dispositif électrique 130 est associé au moyeu 105_{A} de la roue arrière 101_{A}. L'axe tournant du dispositif électrique 130 est avantageusement commun à l'axe 103_{A} du moyeu 105_{A}.

Le dispositif antivol 110 fonctionne entre deux états :
- un état, dit activé, dissuadant un individu 140 d'utiliser la bicyclette 100 en le fatiguant davantage si l'individu 140 pédale sur la bicyclette 100 ;
- un état, dit désactivé, où le fonctionnement de la bicyclette 100 est normal avec ou sans assistance électrique au pédalage.

Afin de dissuader l'individu 140 pendant que le dispositif antivol 110 est activé, le dispositif électrique 130 applique un couple résistif sur le moyeu 105_{A} afin de s'opposer à la rotation du moyeu 105_{A}. Il convient de souligner que le couple résistif ne bloque généralement pas la rotation du moyeu 105_{A}, mais applique une force contrarotative qui dissuade l'individu 140 d'utiliser la bicyclette 100, l'individu 140 devant accentuer son effort de pédalage pour propulser la bicyclette 100.

Afin de créer le couple résistif au moment du pédalage, le dispositif électrique 130 est relié dans le présent exemple non limitatif de l'invention à un circuit 150 de dissipation thermique de l'énergie comprenant une résistance 155 dont la valeur est par exemple comprise entre 0,5 Ohm et 5 Ohms. Il convient de souligner que le circuit 150 de dissipation thermique est un circuit électrique configuré pour créer le couple résistif appliqué par le dispositif électrique.

Le circuit 150 comprend également un interrupteur électronique 156 configuré pour fermer le circuit 150 de dissipation lorsque l'état du dispositif antivol 110 est activé et pour laisser ouvert le circuit 150 lorsque l'état du dispositif antivol 110 est désactivé. L'interrupteur électronique 156 peut être par exemple un relais électronique ou un transistor.

Il convient de souligner que l'état par défaut du dispositif antivol 110 est l'état activé. En l'absence d'application spécifique de tension destiné à changer l'état de l'interrupteur 156, l'interrupteur électronique 156 ferme le circuit 150 de dissipation.

Dans des variantes de ce mode de réalisation particulier de l'invention, le circuit électrique configuré pour créer le couple résistif appliqué par le dispositif électrique est un court-circuit ou comprend une capacité stockant l'énergie électrique créée par le pédalage de l'individu 140 lorsque le dispositif antivol 110 est activé.

Dans d'autres variantes, le circuit électrique configuré pour créer le couple résistif peut également comprendre à la fois une capacité stockant une partie de l'énergie électrique créée par le pédalage de l'individu 140 lorsque le dispositif antivol 110 est activé et une résistance dissipant en chaleur le reste de l'énergie.

Avantageusement, la batterie 137 peut être utilisée pour augmenter la valeur du couple résistif appliqué par le dispositif électrique 130. La batterie 137 n'est ainsi pas utiliser pour assister le pédalage de l'individu 140 mais pour dissuader l'individu 140 de pédaler en le fatiguant davantage par l'apport d'une résistance supplémentaire ressenti dans le pédalage.

Par ailleurs, la carte électronique 135 peut comprendre avantageusement une horloge 157 contrôlant l'application par intermittence du couple résistif ou d'un couple résistif supplémentaire. Cette application par intermittence peut être effectuée par exemple pendant dix secondes toutes les trente secondes.

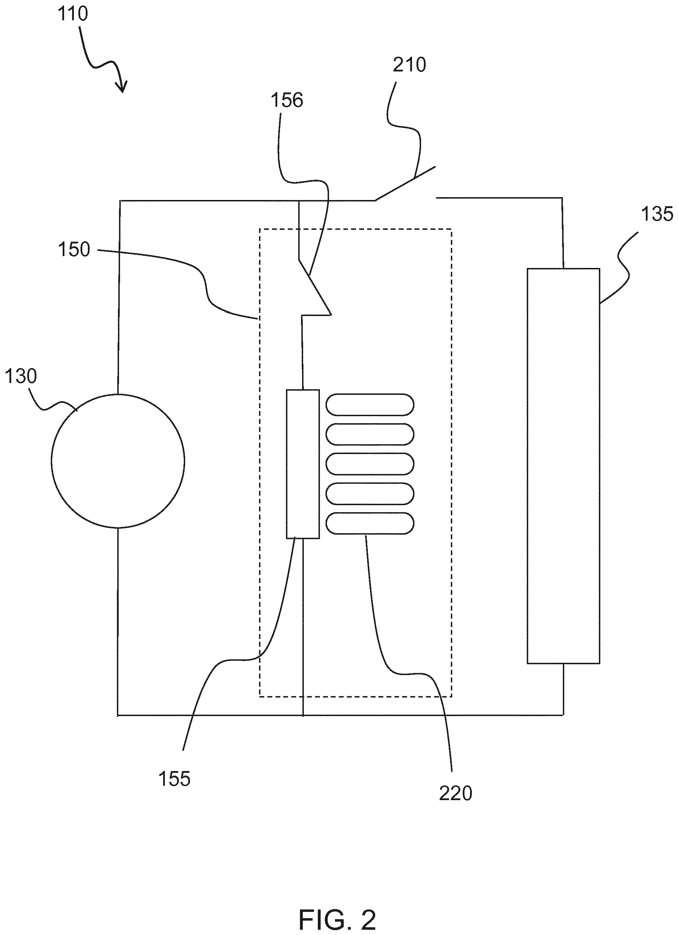

La figure 2 est un schéma électrique du dispositif antivol 110. La résistance 155 du circuit 150 de dissipation thermique est connectée en parallèle de la carte électronique 135 commandant le dispositif électrique 130.

Lorsque le dispositif antivol 110 est activé, l'interrupteur électronique 156 ferme le circuit de dissipation et un interrupteur électronique 210 déconnecte le dispositif électrique 130 de la carte électronique 135. Ainsi aucune assistance au pédalage n'est fournie lorsque le dispositif antivol 110 est activé.

Dans cet état activé du dispositif antivol 110, lorsque l'individu 140 pédale sur la bicyclette 100, l'énergie générée par la rotation du moteur électrique 130 est dissipée en chaleur par un radiateur 220 connecté à la résistance 155.

Lorsque la batterie 137 est utilisée pour appliquer un couple résistif supplémentaire, l'interrupteur 210 est alors également fermé et la carte électronique 135 applique une tension de sens inverse à la tension appliquée dans le cas d'une assistance au pédalage.

*A contrario*, lorsque le dispositif antivol 110 est désactivé, l'interrupteur 156 est ouvert et l'interrupteur 210 est fermé.

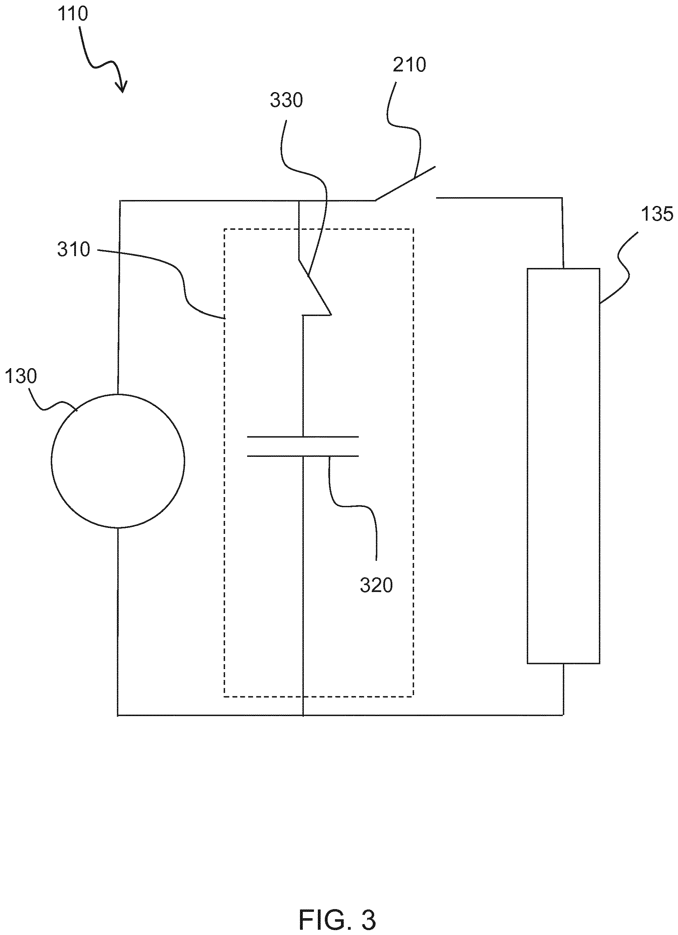

La figure 3 est une variante du schéma électrique du dispositif antivol 110 dans lequel le circuit électronique 310 remplaçant le circuit 150 de dissipation thermique comprend une capacité 320 et un interrupteur électronique 330. Comme précédemment, l'interrupteur 330 est configuré pour être fermé lorsque le dispositif antivol 110 est activé et ouvert lorsque le dispositif antivol 110 est désactivé.

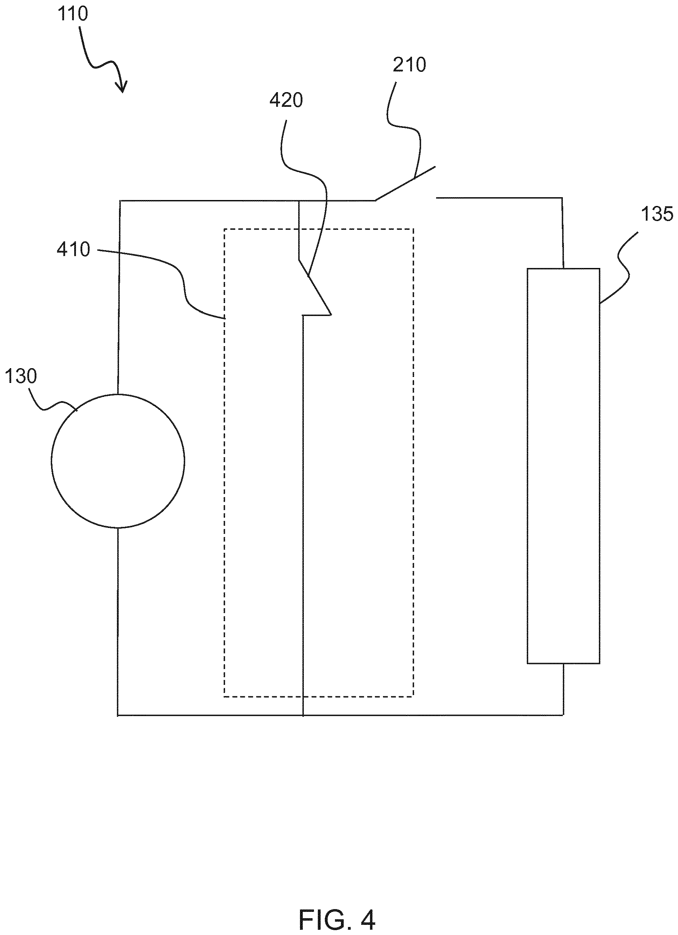

La figure 4 est une autre variante du schéma électrique du dispositif antivol 110 dans lequel le circuit électronique 410 remplaçant le circuit 150 de dissipation thermique est un court-circuit. Le circuit 410 comprend simplement un interrupteur électronique 420 configuré pour être fermé lorsque le dispositif antivol 110 est activé et ouvert lorsque le dispositif antivol 110 est désactivé.

Comme illustré en figure 1, le dispositif antivol 110 comprend également un dispositif 160 de communication sans fil apte à recevoir un message émis à distance par une plateforme informatique 170. Le message reçu par le dispositif 160 de communication comprend généralement une instruction de changement d'état du dispositif antivol 110.

L'individu 140 qui souhaite utiliser librement la bicyclette 100, doit dans le présent exemple non limitatif de l'invention, s'inscrire à un service en ligne. L'individu 140 dispose ainsi d'un compte sur la plateforme informatique 170 gérant l'état de la bicyclette 100, auquel il se connecte par l'intermédiaire d'une application exécutée sur un téléphone portable intelligent 180, couramment appelé par le terme anglais *« smartphone ».*

Afin de pouvoir utiliser librement la bicyclette 100, l'individu 140 identifie la bicyclette 100 en scannant par l'intermédiaire d'un appareil photo du téléphone intelligent 180, un code d'identification 185 de la bicyclette 100. Ce code d'identification 185 peut être par exemple un code QR, un code barre, ou tout autre élément connu par l'homme du métier.

L'identification est ensuite communiquée à la plateforme informatique 170 qui traite l'identification de la bicyclette 100 en relation avec le compte de l'individu 140. Au cours de ce traitement, une vérification de l'état du compte peut être effectuée afin d'autoriser l'individu 140 à utiliser la bicyclette 100.

Lorsque l'individu 140 est autorisé à utiliser la bicyclette 100 par la plateforme informatique 170, l'identification de la bicyclette 100 est associée au compte de l'individu 140 et un signal est émis en direction de la bicyclette 100. Le signal comprend une instruction de déverrouiller le dispositif antivol 110. L'individu 140 peut alors utiliser librement la bicyclette 100.

Il convient de souligner que la bicyclette 100 peut être comprise dans une flotte de bicyclette. La plateforme informatique 170 peut alors adaptée pour gérer l'ensemble de la flotte de bicyclette. Un service de bicyclette partagée, dont la location nécessite une inscription en ligne, voire un abonnement, peut être mis en place.

### Autre exemple de mode de réalisation de l'invention

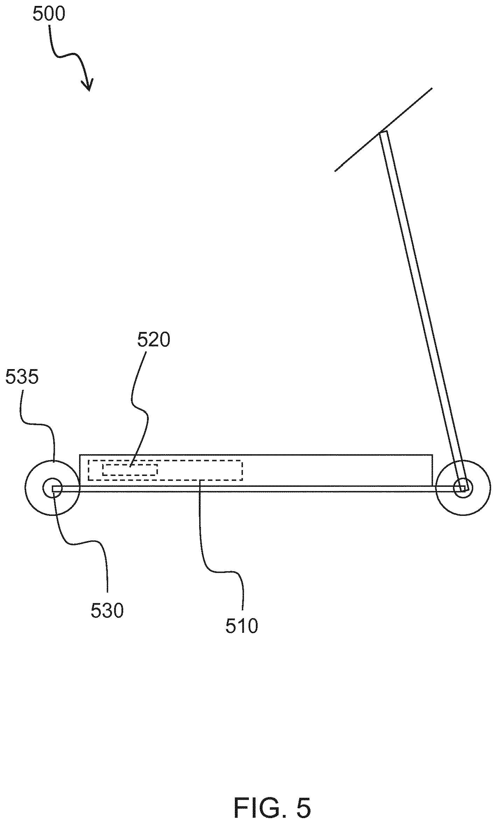

La figure 5 représente une trottinette électrique 500 comprenant un dispositif antivol 510 selon l'invention.

Le dispositif antivol 510 comporte un dispositif électrique 520 associé à un moyeu de la trottinette, ici le moyeu arrière 530 associé à la roue arrière 535.

Le dispositif électrique 520 est un moteur électrique assurant la majeure partie du temps la propulsion de la trottinette électrique 500.

Le dispositif antivol 510 fonctionne entre deux états :
- un état, dit activé, au cours duquel le dispositif électrique 520 applique un couple résistif sur le moyeu 530, le couple résistif s'opposant à la rotation du moyeu 530 ; et
- un état, dit désactivé, au cours duquel le dispositif électrique 520 applique un couple résistif réduit ou nul sur le moyeu 530.

Le dispositif antivol 510 comprend également un circuit électrique connecté au dispositif électrique et configuré pour créer le couple résistif appliqué par le dispositif électrique. Ce circuit électrique peut être un court-circuit, un circuit de dissipation thermique ou comprendre une capacité stockant l'énergie créée par la rotation de la roue arrière 535.

Le circuit électrique peut également comprendre un interrupteur électronique afin de modifier l'état du dispositif antivol 510.

Lorsque le dispositif antivol 510 est activé, un individu (non représenté sur la figure 5), qui essaye de propulser la trottinette en poussant le sol avec une de ses jambes, le couple résistif s'oppose à la rotation de la roue arrière, ce qui fatigue l'individu.

Pour désactiver le dispositif antivol, l'individu utilise généralement un téléphone portable intelligent afin de se connecter à un dispositif de commande du dispositif antivol 510 de la trottinette électrique 500.

La trottinette électrique 500 peut être comprise dans une flotte partagée de trottinette électrique.

## Revendications

1. Dispositif antivol (110 ; 510) pour un véhicule (100 ; 500) à propulsion humaine comprenant au moins un moyeu (105 ; 530),
comprenant un dispositif électrique (130 ; 520) associé audit moyeu, le dispositif antivol fonctionnant entre deux états :
- un état, dit activé, au cours duquel le dispositif électrique applique un couple résistif sur ledit moyeu, le couple résistif s'opposant à la rotation dudit moyeu ; et
- un état, dit désactivé, au cours duquel le dispositif électrique applique un couple résistif réduit ou nul sur ledit moyeu ;
**caractérisé en ce qu'**il comprend un circuit électrique (150 ; 310 ; 410) connecté au dispositif électrique et configuré pour créer le couple résistif appliqué par le dispositif électrique.

2. Dispositif antivol selon la revendication 1, dans lequel le circuit électrique est un circuit (150) de dissipation thermique de l'énergie connecté au dispositif électrique.

3. Dispositif antivol selon la revendication 2, dans lequel le circuit de dissipation thermique comprend une résistance (155) d'une valeur supérieure à la résistance interne du dispositif électrique, la valeur de la résistance du circuit de dissipation étant égale à la valeur de la résistance interne multipliée par un coefficient compris entre deux et dix.

4. Dispositif antivol selon l'une quelconque des revendications 1 à 3, dans lequel le circuit électrique comprend une capacité (320).

5. Dispositif antivol selon la revendication 4, dans laquelle la valeur de la capacité est comprise entre 100mF et 1F.

6. Dispositif antivol selon la revendication 1, dans lequel le circuit électronique est un court-circuit.

7. Dispositif antivol selon l'une quelconque des revendications 1 à 6, dans lequel le circuit électronique comprend également un interrupteur électronique (156 ; 330 ; 420) configuré pour fermer ledit circuit lorsque l'état est activé et pour laisser ouvert ledit circuit lorsque l'état est désactivé.

8. Dispositif antivol selon l'une quelconque des revendications 1 à 7, comprenant également un dispositif (135) de stockage d'énergie électrique connectée au dispositif électrique, l'énergie stockée dans le dispositif de stockage d'énergie étant utilisé pour augmenter la valeur du couple résistif.

9. Dispositif antivol selon l'une quelconque des revendications 1 à 8, comprenant également un dispositif (160) de communication sans fil apte à recevoir un signal permettant de modifier l'état du dispositif électrique.

10. Dispositif antivol selon l'une quelconque des revendications 1 à 9, dans lequel l'état par défaut du dispositif antivol est l'état activé.

11. Dispositif antivol selon l'une quelconque des revendications 1 à 10, comprenant également une horloge contrôlant l'application par intermittence du couple résistif.

12. Dispositif antivol selon l'une quelconque des revendications 1 à 11, comprenant également un dispositif de signalement de l'état activé du dispositif électrique, par l'émission d'un signal sonore et/ou lumineux.

13. Véhicule (100 ; 500) à propulsion humaine, **caractérisé en ce qu'**il comprend un moyeu et un dispositif antivol (110 ; 510), selon l'une quelconque des revendications 1 à 12, associé audit moyeu.

14. Véhicule à propulsion humaine selon la revendication 13, **caractérisé en ce que** ledit véhicule est une bicyclette à assistance électrique au pédalage.

15. Procédé de désactivation à distance du dispositif antivol d'un véhicule selon l'une quelconque des revendications 13 à 14, **caractérisé en ce qu'**il comprend des étapes de :
- identification dudit véhicule par un individu disposant d'un compte sur une plateforme informatique ;
- communication de ladite identification à la plateforme informatique ;
- traitement de l'identification dudit véhicule par la plateforme informatique en relation avec le compte de l'individu ;
- association de ladite identification au compte de l'individu ;
- émission d'un signal en direction dudit véhicule, le signal comprenant une instruction de modifier l'état du dispositif antivol en état désactivé.
